# EUROPEAN PATENT SPECIFICATION

(11) **EP 4 353 422 B1**
(45) Date of publication and mention of the grant of the patent: **21.05.2025**
(21) Application number: 22881195.6
(22) Date of filing: 25.08.2022
(51) Int. Cl.: G05D 1/246, G05D 1/242, G05D 1/648, G05D 1/698

(54) **ROBOT, ROBOT SYSTEM AND CONTROLLING METHOD THEREOF**
ROBOTER, ROBOTERSYSTEM UND STEUERUNGSVERFAHREN DAFÜR
ROBOT, SYSTÈME DE ROBOT ET SON PROCÉDÉ DE COMMANDE

(30) Priority: 14.10.2021 KR 20210136679
(43) Date of publication of application: 17.04.2024
(73) Proprietor: Samsung Electronics Co., Ltd., Suwon-si, Gyeonggi-do 16677 (KR)
(72) Inventor: KIM, Hyomuk, Suwon-si Gyeonggi-do 16677 (KR); BAIK, Aron, Suwon-si Gyeonggi-do 16677 (KR)
(74) Representative: Gulde & Partner
(86) International application number: PCT/KR2022/012758
(87) International publication number: WO 2023/063565

(56) References cited:
- JP-A- 2003 180 587
- JP-A- 2003 515 801
- JP-A- 2016 181 123
- KR-A- 20190 003 969
- KR-B1- 101 450 843
- US-A1- 2017 229 023
- US-A1- 2018 192 845
- US-A1- 2019 217 474
- US-B2- 11 137 773

## Description

### [Technical Field]

The disclosure relates to robots, a robot system and a controlling method thereof, and more particularly, to a first robot that accommodates a second robot and provides service together with the second robot, a robot system including the first robot and the second robot, and a controlling method thereof.

### [Background Art]

Recently, developments in technology for robots disposed at an indoor space and provide services to users have become more active. Robots may travel the indoor space and provide various services such as, for example, and without limitation, cleaning, guiding, serving, patrolling, emergency situation response, or the like.

However, there has been a problem of not being able to provide satisfactory service to a user with only a single robot because a dead zone in which a robot cannot travel within a map corresponding to the indoor space may be formed due to limitations in form factor of the robot itself and obstacles positioned within a space. The US 2019/217474 A1 discloses a mother-child cooperative work system with mother robot and a child robot, where the mother robot effectively positions the child robot to move to an assigned place to cooperatively work according to the map of the child robot. The US 2018/192854 A1 discloses a robot system with a primary robot and a secondary robot, wherein the secondary robot is released from the first robot for some unusual target zones where the primary robot is unable to enter to perform the first cleaning task, the smaller secondary robot is used to perform a second cleaning task inside each of those unusual target zones.

Robots of the related art have been able to reduce the dead zones by the robot and an external robot accommodated in the robot cooperating and providing a service, but there is still a problem of providing smooth service being difficult when an error in communication occurs between the robot and the external robot. Accordingly, there is a continuous need for a method which can actively overcome an error when a communication error between the robot and the external robot occurs.

### [Disclosure]

### [Technical Solution]

According to the invention, a robot is provided according to claim 1 of the appended set of claims.

The processor may be further configured to: identify, while communicating with the external robot through the communication interface, the pose of the external robot based on the type of the at least one echo signal received from the external robot, and transmit a control signal for changing the pose of the external robot to the external robot through the communication interface based on the pose of the external robot and the stored map data.

The processor may be further configured to transmit, based on an error occurrence in communication through the communication interface being predicted based on the pose of the external robot and the stored map data, a control signal for changing the pose of the external robot to the external robot through the communication interface.

The processor may be further configured to determine a likelihood of an error occurring in communication through the communication interface based on information on obstacles disposed in an area corresponding to a position of the external robot on the map data, the pose of the external robot, and a moving path of the external robot.

The external robot may include a plurality of sensors configured to output echo signals of different types and disposed at different positions, and the processor may be further configured to: identify, based on an error occurring in communication with the external robot through the communication interface, positions of the plurality of sensors, which output a plurality of echo signals from among the plurality of sensors disposed in the external robot, based on types of the plurality of echo signals received from the external robot, and identify the pose of the external robot based on the positions of the plurality of sensors.

The processor may be further configured to identify, based on pose information being received from the external robot through the communication interface, the target position of the robot based on the pose information, the pose of the external robot, and the stored map data.

The sensor may include a light detection and ranging (LiDAR) sensor, and the processor may be further configured to obtain the position information of the external robot based on a sensing signal obtained by the LiDAR sensor and the time at which the at least one echo signal is received from the external robot.

The sensor may include a light detection and ranging (LiDAR) sensor, and the processor may be further configured to: obtain obstacle information based on a sensing signal obtained by the LiDAR sensor, and change a position of the communication interface based on the obstacle information and the position information of the external robot.

The robot may further include a storage space configured to accommodate the external robot, and the processor may be further configured to: control, based on work by the external robot being identified as necessary, an output of the external robot from the storage space, plan, based on the work by the external robot being identified as completed, a moving path of the external robot based on the pose of the external robot, and control the operation state of the external robot to accommodate the external robot in the storage space based on the moving path.

The communication interface may be configured to communicate according to a short range communication method including Bluetooth communication, and the sensor may include at least one of an infrared sensor or an ultra wide band (UWB) sensor.

According to an aspect of the invention, a system is provided according to claim 11 of the appended set of claims.

According to another aspect of the invention, a method of controlling a robot is provided according to claim 12 of the appended set of claims.

According to an embodiment, in terms of a non-transitory computer-readable storage medium configured to store computer instructions to perform an operation of a robot when executed by a processor of the robot, the operation includes outputting a sensing signal for sensing a distance with an external robot, and obtaining position information of the external robot based on a time at which at least one echo signal is received from the external robot; driving at least one of the robot or the external robot based on the position information; identifying, based on an error in communication with the external robot, a pose of the external robot based on a type of the at least one echo signal received from the external robot; identifying a target position of the robot based on the pose of the external robot and map data; and moving the robot to the target position.

### [Description of Drawings]

FIG. 1 is a diagram schematically illustrating a cooperative service providing operation of a robot and an external robot according to an embodiment of the disclosure;
FIG. 2 is a block diagram illustrating a configuration of a robot according to an embodiment of the disclosure;
FIG. 3 is a block diagram illustrating a functional configuration of a robot according to an embodiment of the disclosure;
FIG. 4A and FIG. 4B are diagrams illustrating an operation by a robot identifying a pose of an external robot according to an embodiment of the disclosure;
FIG. 5 is a diagram illustrating an operation by a robot controlling an external robot based on map data according to an embodiment of the disclosure;
FIG. 6 is a diagram illustrating an operation by a robot accommodating an external robot according to an embodiment of the disclosure;
FIG. 7 is a diagram illustrating an error removal operation of a robot according to an embodiment of the disclosure;
FIG. 8 is a diagram illustrating an error removal operation of a robot according to another embodiment of the disclosure;
FIG. 9 is a sequence diagram illustrating a service providing process through a robot system according to an embodiment of the disclosure;
FIG. 10 is a block diagram illustrating in detail a configuration of a robot according to an embodiment of the disclosure; and
FIG. 11 is a flowchart illustrating a controlling method according to an embodiment of the disclosure.

### [Detailed Description of Exemplary Embodiments]

The disclosure will be described in detail below with reference to the accompanying drawings.

Terms used in describing an embodiment of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation but based on the meaning of the term and the overall context of the disclosure

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

Herein, the expression "at least one of A or B" is to be understood as indicating any one of "A" or "B" or "A and B."

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used herein perform at least one function or operation, and may be implemented with a hardware or software, or implemented with a combination of hardware and software. Further, a plurality of "modules" or a plurality of "parts," except for a "module" or a "part" which needs to be implemented to a specific hardware, may be integrated to at least one module and implemented in at least one processor.

In the disclosure, the term 'user' may refer to a person that received service from a robot, but is not limited thereto.

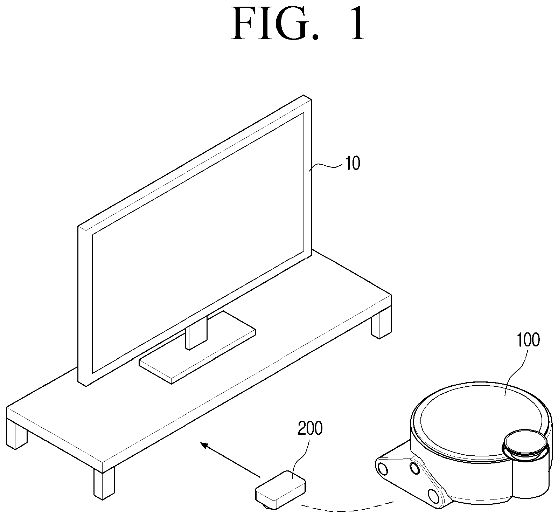

FIG. 1 is a diagram schematically illustrating a cooperative service providing operation of a robot and an external robot.

The robot 100 according to an embodiment of the disclosure may be disposed at a specific space, and provide various services to a user who lives in the space or is temporarily visiting. The robot 100 may provide services corresponding to at least one of cleaning, guiding, serving, patrolling, or emergency situation response, but is not limited thereto.

In addition, in the specific space, at least one external robot 200 may be disposed in addition to the robot 100, and the robot 100 and the at least one external robot 200 may provide services to the user through inter-cooperation. Here, providing services through cooperation may refer to the robot 100 and the at least one external robot 200 providing services associated with one another due to the robot 100 and the at least one external robot 200 being integrated and controlled integrally based on task information associated with one another.

The at least one external robot 200 may be a robot with a different specification from the robot 100. The at least one external robot 200 may have a size smaller than the robot 100, and may include a coupling part necessary for being accommodated in the robot 100. The at least one external robot 200 may be usually in standby accommodated in a storage space provided in the robot 100 and provide a service by being output from the storage space of the robot 100 when work by the at least one external robot 200 is necessary.

In addition, the at least one external robot 200 may provide a service by being controlled by the robot 100. The at least one external robot 200 may obtain task information and moving path information based on a control signal received from the robot 100, and provide a service based on the obtained task information and moving path information.

The robot according to an example may travel a space and obtain map data for the corresponding space and task information corresponding to a service to be performed by the robot 100, and determine whether work by the at least one external robot 200 is necessary based on the obtained map data and task information. For example, the robot 100 may identify that work by the external robot 200 having a size smaller than the robot 100 is necessary to clean an area in which an obstacle 10 is positioned while the robot 100 is travelling the space to provide a cleaning service.

In this case, the robot 100 may obtain task information associated with a task to be allocated to the external robot 200, and obtain moving path information associated with a path to which the external robot 200 is to move to perform the task. In addition, the robot 100 may transmit a control signal for controlling the external robot 200 to the external robot 200 based on the obtained task information and moving path information.

If an error in communication occurs between the robot 100 and the external robot 200 in a process of the external robot 200 providing a service, the robot 100 may identify a target position to which the robot 100 is to move based on an identified pose of the external robot 200 and map data of the area in which the obstacle 10 is positioned, and restore communication with the external robot 200 by moving to the identified target position.

In addition, if the external robot 200 output from the robot 100 has completed the work, the external robot 200 may return to the storage space of the robot 100 from the area in which the obstacle 10 is positioned by receiving control of the robot 100.

Various embodiments of overcoming the communication error by moving to a determined target position determined based on the pose of the external robot and the stored map data when the communication error between the robot and the external robot occurs will be described in greater detail below.

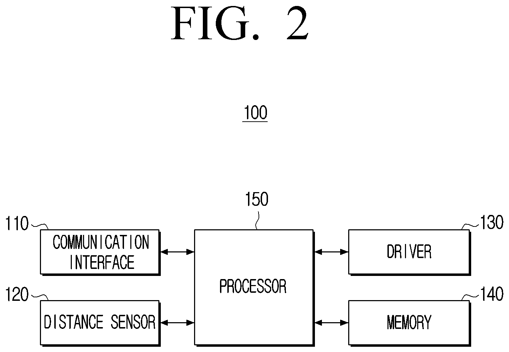

FIG. 2 is a block diagram illustrating a configuration of a robot according to an embodiment of the disclosure.

Referring to FIG. 2, the robot 100 includes a communication interface 110, a distance sensor 120, a driver 130, a memory 140, and a processor 150.

The communication interface 110 may input and output data of various types. For example, the communication interface 110 may transmit and receive data of various types with an external device (e.g., source device), an external storage medium (e.g., a USB memory), or an external server (e.g., WEBHARD) through communication methods such as, for example, and without limitation, an AP based Wi-Fi (e.g., Wi-Fi^{®}, wireless LAN network), Bluetooth^{®}, ZigBee^{®}, a wired/wireless local area network (LAN), a wide area network (WAN), Ethernet^{®}, IEEE 1394, a high-definition multimedia interface (HDMI), a universal serial bus (USB), a mobile high-definition link (MHL), Audio Engineering Society/European Broadcasting Union (AES/EBU), Optical, Coaxial, or the like.

The distance sensor 120 obtains distance data. The distance sensor 120 may measure distance between a position of the robot 100 and a position of the at least one external robot, and obtain distance data based on the measurement result. The distance sensor 120 according to an example may include at least one from among an infrared sensor, an ultra wide band (UWB) sensor, a light detection and ranging (LiDAR) sensor, or a 3-dimensional (3D) camera, but is not limited thereto.

The driver 130 may be a device which can control a travel of the robot 100. The driver 130 may adjust a traveling direction and traveling speed according to control by the processor 150, and the driver 130 according to an example may include a device that can control a travel of the robot 100. The driver 130 may adjust a travel direction and a travel speed according to control of the processor 150, and the driver 130 according to an example may include a power generating device (e.g., a gasoline engine, a diesel engine, a liquefied petroleum gas (LPG) engine, an electric motor, and the like according to a fuel (or an energy source) used) that generates power for the robot 100 to travel, a steering device (e.g., manual steering, hydraulics steering, electronic control power steering (EPS), etc.) for adjusting the travel direction, a travel device (e.g., a wheel, a propeller, etc.) that travels the robot 100 according to power, and the like. Here, the driver 130 may be modified and implemented according to a travelling type (e.g., a wheel type, a walking type, a flying type, etc.) of the robot 100.

The memory 140 may store data necessary for the one or more embodiments of the disclosure. The memory 140 may be implemented in the form of a memory embedded in the robot 100 according to a data storage use, or in the form of a memory attachable to or detachable from the robot 100. For example, the data for the driving of the robot 100 may be stored in a memory embedded to the robot 100, and data for an expansion function of the robot 100 may be stored in a memory attachable to or detachable from the robot 100. The memory embedded in the robot 100 may be implemented as at least one from among a volatile memory (e.g., a dynamic random access memory (DRAM), a static RAM (SRAM), or a synchronous dynamic RAM (SDRAM)), or a non-volatile memory (e.g., one time programmable read only memory (OTPROM), programmable ROM (PROM), erasable and programmable ROM (EPROM), electrically erasable and programmable ROM (EEPROM), mask ROM, flash ROM, a flash memory (e.g., NAND flash or NOR flash), a hard disk drive (HDD) or a solid state drive (SSD)). In addition, a memory attachable to or detachable from the robot 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., USB memory) connectable to a USB port, or the like.

The memory 140 stores map data corresponding to the space in which the robot 100 travels. The processor 150 may receive map data from an external server and store in the memory 140, or generate map data based on distance data obtained from the distance sensor 120 and store the same in the memory 140.

The processor 150 may control the overall operation of the robot 100. The processor 150 may control the overall operation of the robot 100 by being coupled with each configuration of the robot 100. For example, the processor 150 may control an operation of the robot 100 by being coupled with the communication interface 110, the distance sensor 120, the driver 130, and the memory 140.

The processor 150 according to an embodiment may be designated to various names such as, for example, and without limitation, a digital signal processor (DSP), a microprocessor, a central processing unit (CPU), a micro controller unit (MCU), a micro processing unit (MPU), a neural processing unit (NPU), a controller, an application processor (AP) and the like, but will be described as the processor 150 in the disclosure.

The processor 150 may be implemented as a system on chip (SoC) or a large scale integration (LSI), or may be implemented in a form of a field programmable gate array (FPGA). In addition, the processor 150 may include a volatile memory such as a SRAM.

According to an embodiment of the disclosure, the processor 150 may control the distance sensor 120 to output a sensing signal for sensing the distance with the external robot. In addition, the processor 150 may obtain position information of the external robot based on time at which at least one echo signal is received from the external robot.

In addition, the processor 150 may more accurately identify the position of the external robot based on a time at which a sensing signal obtained by the LiDAR sensor and at least one echo signal is received from the external robot.

The echo signal may refer to a signal transmitted to the robot 100 based on the external robot receiving the sensing signal, and the robot 100 may receive the echo signal through the distance sensor 120. The processor 150 may identify the distance between the robot 100 and the external robot according to at least one from among a time of flight (TOF) method or a time of arrival (TOA) method based on a time-point at which the sensing signal is output and a time-point at which the echo signal is received, and obtain position information of the external robot based on the identified distance.

The processor 150 may change the position of the robot 100 by controlling the driver 130 based on the obtained position information. For example, the processor 150 may control the driver 130 for the robot 100 to move to a position close with an identified position of the external robot based on the obtained position information and map data of the space.

In addition, the processor 150 may control an operation state of the external robot based on the obtained position information. For example, the processor 150 may control the communication interface 110 to obtain task information corresponding to the service to be performed by the external robot, and to transmit a control signal for controlling an operation state of the external robot to the external robot based on the task information and the map data of the space.

In addition, the processor 150 identifies a pose of the external robot based on a type of at least one echo signal received from the external robot if an error in communication with the external robot through the communication interface 110 is identified as having occurred. The pose may include position information of the external robot and information on a direction to which the external robot is facing, but is not limited thereto.

For example, the external robot may include a plurality of sensors disposed at different positions and output echo signals of different types, and a plurality of echo signals received from the external robot may be signals output from the respective sensors that output echo signals of different types. The processor 150 identifies the positions of the respective sensors that output the plurality of echo signals from among the plurality of sensors disposed in the external robot based on the types of the plurality of echo signals received from the external robot if an error in communication with the external robot through the communication interface 110 is identified as having occurred.

The processor 150 may identify the position of the external robot by separately calculating the distance between the respective sensors of the external robot corresponding to the received plurality of echo signals and the distance sensor 120 that received the corresponding signal, and identify the pose of the external robot based on the identified positions of the respective sensors.

If there is no problem in receiving the echo signal through the distance sensor 120 even if an error in communication through the communication interface 110 has occurred, the processor 150 may continuously update the pose of the external robot based on the echo signal received after the occurrence of the communication error. If an error has occurred in not only communication through the communication interface 110 but also in receiving the echo signal through the distance sensor 120, the processor 150 may identify the pose of the external robot based on the last received echo data, and determine that the external robot is maintaining the last identified pose.

The processor 150 identifies the target position for the robot 100 to move to remove the communication error based on the identified pose of the external robot and the stored map data. The target position is a position to which a visibility to the position of the external robot is secured, and communication may be resumed as there is no obstacle present which interferes with the transmission and reception of radio waves between the robot 100 and the external robot when the robot 100 moves to the target position.

The processor 150 considers pose information received from the external robot in identifying the target position of the robot 100. The pose information may include information on the position of the external robot obtained through a sensor provided in the external robot and direction to which the external robot is facing, and the processor 150 may receive pose information from the external robot through the communication interface 110, and the robot 100 may correct the identified pose of the external robot based on the received pose information.

For example, the processor 150 may identify the direction to which the external robot is facing based on the received pose information, and determine a corrected position obtained by applying weight values to the identified positions of the external robots, respectively, as the position of the external robot based on the position of the external robot identified by the robot 100 and the pose information, but is not limited thereto.

The processor 150 may identify the target position for the robot 100 to move based on the corrected pose of the external robot and information on obstacles on the stored map data. In addition, the processor 150 may control the driver 130 for the robot 100 to move to the identified target position. If communication is resumed due to the communication error between the robot 100 which moved to the target position and the external robot being removed, the robot 100 may carry on providing service by continuing to control the external robot.

According to another example, the processor 150 may obtain obstacle information based on a sensing signal obtained by the LiDAR sensor, and change the position of the communication interface 110 based on the obtained obstacle information and position information of the external robot. For example, the processor 150 may obtain information on a Z-axis in which the obstacle is positioned, and remove the communication error between the robot 100 and the external robot by adjusting a height of the communication interface 110 such that the communication interface 110 is positioned within a Z-axis range in which the obstacle is not positioned.

The processor 150 may identify the pose of the external robot based on a type of at least one echo signal received from the external robot while communicating with the external robot through the communication interface 110, and transmit a control signal for changing the pose of the external robot based on the identified pose of the external robot and the stored map data to the external robot through the communication interface 110.

The processor 150 may control the communication interface 110 to transmit the control signal for changing the pose of the external robot to the external robot if an error occurrence in communication through the communication interface 110 is predicted based on the identified pose of the external robot and the stored map data. The processor 150 may identify a likelihood of error occurrence in communication through the communication interface 110 based on information of an obstacle disposed in an area corresponding to the position of the external robot on the stored map data, the identified pose of the external robot, and the moving path of the external robot.

For example, the processor 150 may identify, based on an error in communication being identified as likely to occur due to an obstacle which interferes in the transmission and reception of radio waves between the robot 100 and the external robot within a threshold time when the external robot continues to travel like previously based on position information of the external robot and information on the direction to which the external robot is facing, an area on the map data with a likelihood of an error in communication occurring due to the obstacle, and control the communication interface 110 to transmit a control signal for the external robot to travel on a remaining area other than the corresponding area to the external robot.

That is, the processor 150 may prevent the communication error from occurring by changing or adjusting the moving path of the external robot by predicting in advance that an error in communication with the external robot through the communication interface 110 is to occur.

The robot 100 may further include a storage space in which the external robot is accommodated. The processor 150 may control for the external robot to be output from the storage space if the work by the external robot is identified as necessary, plan a moving path of the external robot based on the pose of the external robot if the work by the external robot is identified as completed, and control an operation state of the external robot for the external robot to be accommodated in the storage space based on the planned moving path.

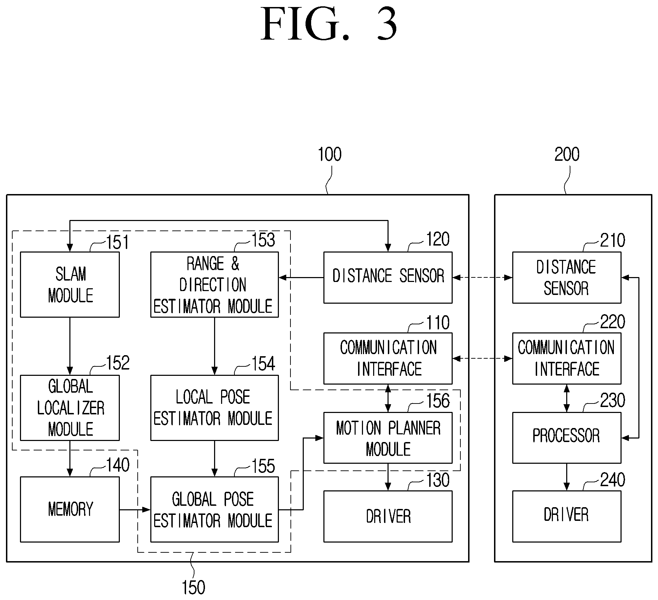

FIG. 3 is a block diagram illustrating a functional configuration of a robot according to an embodiment of the disclosure.

Referring to FIG. 3, the processor may include a SLAM module 151, a global localizer module 152, a range & direction estimator module 153, a local pose estimator module 154, a global pose estimator module 155, and a motion planner module 156.

The SLAM module 151 may obtain information on an object included in a space through a simultaneous localization and mapping method, that is, simultaneous localization and mapping (SLAM), and generate map data based on the obtained information. The object may include not only a wall, a pillar, and a fixed obstacle that form a space, but also a dynamic object that continuously changes in its position.

The SLAM module 151 according to an example may obtain a distance between the robot 100 and an object included in a space through the distance sensor 120, and generate map data of the space based on the obtained distance data. In addition, the SLAM module 151 may update map data of the space by newly obtaining distance data through the distance sensor 120 if a pre-set period arrives or if a pre-set event occurs.

The global localizer module 152 may map the position of the robot 100 on the generated map data. For example, the global localizer module 152 may obtain map data mapped with the position of the robot 100 based on map data generated by the SLAM module 151 and position information of the robot 100. In addition, the global localizer module 152 may continuously update the position of the robot 100 mapped on the map data based on the position of the robot 100 which changes according to the robot 100 moving.

The range & direction estimator module 153 may obtain information on a distance and direction reaching the external robot 200 based on the robot 100. If a distance sensor 210 of the external robot 200 includes a plurality of sensors that output echo signals of different types by being disposed at different positions of the external robot 200, the range & direction estimator module 153 according to an example may separately calculate the distance and direction between the respective sensors of the external robot 200 corresponding to the plurality of echo signals received through the distance sensor 120 and the distance sensor 120 which received the corresponding signal.

The local pose estimator module 154 may identify the pose of the external robot 200 based on distance and direction information obtained through the range & direction estimator module 153. If the external robot 200 includes a plurality of sensors, the local pose estimator module 154 according to an example may identify the pose of the external robot 200 based on the position and direction of the respective sensors obtained through the range & direction estimator module 153 if an error in communication with the external robot 200 through the communication interface 110 is identified as having occurred.

The global pose estimator module 155 may map the position and the facing direction of the external robot 200 on the whole map data based on map data mapped with the identified pose of the external robot 200 through the local pose estimator module 154 and the position of the robot 100 stored in the memory 140. In other words, if the local pose estimator module 154 obtains information on a positional relationship between the robot 100 and the external robot 200 positioned within a threshold range from the robot 100, the global pose estimator module 155 may obtain final map data mapped with information on the positions of the robot 100 and the external robot 200 and directions to which the robot 100 and the external robot 200 are facing with respect to map data obtained through the global localizer module 152 based on information obtained through the local pose estimator module 154, obstacle information included in the space, and the like.

The motion planner module 156 may obtain task information to allocate to the external robot 200 if work by the external robot 200 is identified as necessary. In addition, a path for the external robot 200 to move and associated moving path information may be obtained based on the final map data obtained through the global pose estimator module 155 and the task information to allocate to the external robot 200. The motion planner module 156 may control the communication interface 110 to transmit a control signal for driving the external robot 200 to the external robot 200 based on the obtained moving path information.

For example, the motion planner module 156 may output the external robot 200 from the storage space in which the external robot 200 is accommodated, and guide a provision of service through the external robot 200 while continuously monitoring the pose of the output external robot 200. In addition, the motion planner module 156 may plan a return path of the external robot 200 based on the pose of the external robot 200 when the work by the external robot 200 is identified as having been completed, and transmit a control signal for the external robot 200 to be accommodated in the storage space to the external robot 200 through the communication interface 110 based on the planned return path.

If an error in communication with the external robot 200 through the communication interface 110 is identified as having occurred, the motion planner module 156 may identify a target position for the robot to move to resume communication based on the final map data, and control the driver 130 for the robot 100 to move to the identified target position. The motion planner module 156 according to an example may correct the final map data taking into consideration pose information received from the external robot 200 through the communication interface 110, and identify the target position based on the corrected final map data.

In addition, the motion planner module 156 may calculate a likelihood of error occurrence in communication through the communication interface 110 based on information on obstacles disposed in an area corresponding to the position of the external robot 200 based on the final map data, the pose of the external robot 200, and the moving path of the external robot 200, and control the communication interface 110 to transmit a control signal for changing the pose of the external robot 200 to the external robot 200 if the likelihood of error occurrence is identified as greater than or equal to a threshold value.

According to another example, the motion planner module 156 may remove the communication error between the robot 100 and the external robot 200 by adjusting the height of the interface 110 based on obstacle information obtained through the distance sensor 120 and position information of the external robot 200 if the likelihood of error occurrence in communication through the communication interface 110 is identified as greater than or equal to the threshold value.

The external robot 200 according to an embodiment of the disclosure may include a distance sensor 210, a communication interface 220, a processor 230, and a driver 240. The distance sensor 210 may include a plurality of sensors which output echo signals of different types by being disposed at different positions on the external robot 200. The communication interface 220 may transmit and receive data of various types from the relationship with the communication interface 110 of the robot 100 according to a short range communication method which includes Bluetooth^{®} communication.

The processor 230 may control the overall operation of the external robot 200 by being coupled with each configuration of the external robot 200. For example, the processor 230 may output, based on a sensing signal for sensing the distance between the robot 100 and the external robot 200 being received from the robot 100, a plurality of echo signals having different types through the plurality of sensors included in the distance sensor 210.

In addition, the processor 230 may control, based on the control signal for driving the external robot 200 being received through the communication interface 220, the driver 240 for the external robot 200 to operate based on the received control signal. For example, the processor 230 may change the pose of the external robot 200 based on the received control signal, but is not limited thereto.

In addition, the processor 230 may obtain pose information including information on the position of the external robot 200 and the direction to which the external robot 200 is facing and control the communication interface 220 to transmit the obtained pose information to the robot 100.

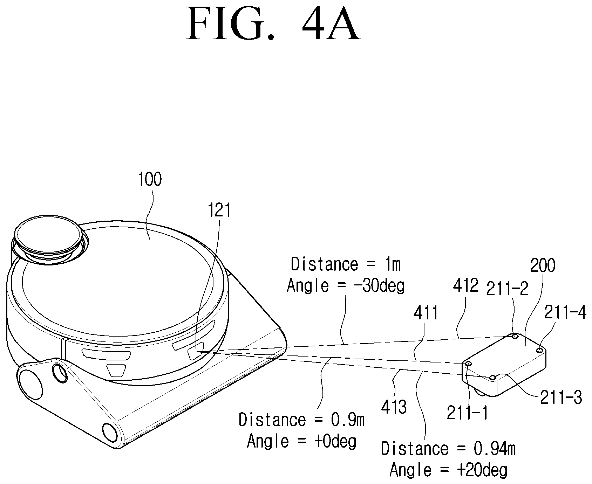

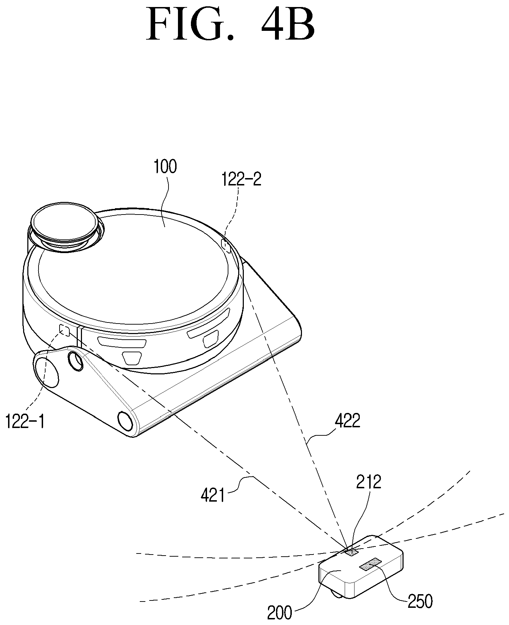

FIG. 4A and FIG. 4B are diagrams illustrating an operation by a robot identifying a pose of an external robot according to an embodiment of the disclosure.

Referring to FIG. 4A, the distance sensor 120 provided in the robot 100 may include an infrared sensor 121, and the external robot 200 may include a plurality of sensors 211-1 to 211-4 which output echo signals of different types by being disposed at different positions. Here, information on a disposition relationship of the plurality of sensors 211-1 to 211-4 positioned in the external robot 200 may be pre-stored in the memory 140.

The processor 150 may control the infrared sensor 121 to output a sensing signal for sensing the distance with the external robot 200. The external robot 200 which received the sensing signal output from the infrared sensor 121 through the plurality of sensors 211-1 to 211-4 may output a plurality of echo signals having different types through the respective sensors 211-1 to 211-4. Referring to FIG. 4A, because only first to third sensors 211-1 to 211-3 from among the plurality of sensors 211-1 to 211-4 receive the sensing signal, the external robot 200 may output echo signals of three types corresponding to the first to third types, respectively.

The robot 100 may receive echo signals of three types corresponding to the first to third types through the infrared sensor 121, and identify the positions of the first to third sensors 211-1 to 211-3 corresponding to the respective echo signals received based on time at which the plurality of echo signals are received.

The robot 100 may respectively identify that a distance between the infrared sensor 121 and a first sensor 211-1 is 0.9m and an angle formed thereto is 0 degrees (411), a distance between the infrared sensor 121 and a second sensor 211-2 is 1m and an angle formed thereto is -30 degrees

(412), and a distance between the infrared sensor 121 and a third sensor 211-3 is 0.94m and an angle formed thereto is +20 degrees (413), and identify the pose of the external robot 200 based therefrom.

In FIG. 4A the robot 100 is shown as including a single infrared sensor 121 positioned at a front surface part, but is not limited thereto, and the robot 100 may further include infrared sensors at a side surface part and a back surface part. In this case, the robot 100 may more accurately identify the pose of the external robot 200 based on a plurality of data sets obtained through a plurality of infrared sensors 121 and the like.

Referring to FIG. 4B, the distance sensor 120 provided in the robot 100 may include a pair of ultra wide band (UWB) sensors 122-1 and 122-2, and the distance sensor 210 provided in the external robot 200 may include a UWB sensor 212. In this case, the pair of UWB sensors 122-1 and 122-2 provided in the robot 100 may operate as a UWB anchor, and the UWB sensor 212 provided in the external robot 200 may operate as a UWB tag, but are not limited thereto.

According to an example, the sensor 212 provided in the external robot 200 operating as a UWB tag may continuously output radio waves. The processor 150 may control the pair of UWB sensors 122-1 and 122-2 to output a sensing signal for sensing the distance with the external robot 200 based on receiving the radio waves continuously being output from the sensor 212 provided in the external robot 200. The external robot 200 that received the sensing signal output from the pair of UWB sensors 122-1 and 122-2 through the UWB sensor 212 may output an echo signal through the UWB sensor 212.

The robot 100 may receive the echo signal through the pair of UWB sensors 122-1 and 122-2, and obtain a pair of distance data sets corresponding to each of the pair of UWB sensors 122-1 and 122-2 based on time at which the echo signal is received. In addition, the robot 100 may identify that the UWB sensor 212 included in the external robot 200 is positioned at a point at which a virtual circle corresponding to distance data 421 obtained through a first UWB sensor 122-1 and a virtual circle corresponding to distance data 422 obtained through a second UWB sensor 122-2 intersects, and identify the pose of the external robot 200 based on the identified position of the UWB sensor 212.

In FIG. 4B, the robot 100 is shown as including the pair of UWB sensors 122-1 and 122-2, and the external robot 200 is shown as including the single UWB sensor 212, but the robot 100 and the external robot 200 may include additional UWB sensors, and through the above, the robot 100 may more accurately identify the pose of the external robot 200.

In addition, the external robot 200 according to an example may further include an inertia measurement device 250. The inertia measurement device 250 may include a sensor such as an accelerometer, a tachometer, and a magnetometer, and the external robot 200 may obtain information on a position change value of the external robot 200 corresponding to a traveling history of the external robot 200 and a rotation angle of the external robot 200 based on sensing data obtained through the inertia measurement device 250.

In addition, the processor 230 may obtain pose information of the external robot 200 based on the obtained information, and transmit the obtained pose information to the robot 100 through the communication interface 220. The robot 100 may correct the pose of the external robot 200 identified by the robot 100 based on the pose information received from the external robot 200.

That is, if the external robot 200 includes the inertia measurement device 250, the robot 100 may be able to more accurately identify the pose of the external robot 200, and if an error in communication with the external robot 200 occurs thereafter, more accurately identify the target position for the robot 100 to move to remove the communication error.

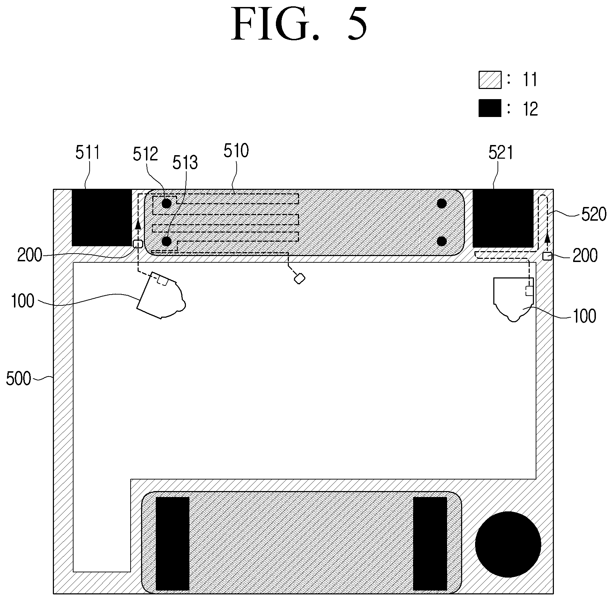

FIG. 5 is a diagram illustrating an operation by a robot controlling an external robot based on map data according to an embodiment of the disclosure.

Referring to FIG. 5, the robot 100 may provide a cleaning service while traveling a space corresponding to map data 500. Here, in the map data 500, information on an area 11 through which the robot 100 is not able to travel and information on an obstacle area 12 through which both the robot 100 and the external robot 200 are not able to travel may be included.

The robot 100 according to an example may accommodate at least one external robot 200 in the storage space, output the external robot 200 if cleaning work by the external robot 200 is identified as necessary, and guide for the external robot 200 to provide a service while traveling within an area 11 through which the robot 100 is not able to travel.

For example, the robot 100 may control an operation state of the external robot 200 based on information on obstacles disposed in the area corresponding to the position of the external robot 200 on the map data 500, the identified pose information of the external robot 200, and the moving path of the external robot 200. The robot 100 may obtain a moving path 510 for cleaning a floor surface underneath a furniture or a moving path 520 for cleaning a narrow space between a furniture and a wall surface through the external robot 200, and control the operation state of the external robot 200 based on task information corresponding to the obtained moving path 510 or 520 and the moving path information.

If the robot 100 controls the external robot 200 based on the moving path 510 for cleaning the floor surface underneath the furniture, the robot 100 may control the external robot 200 based on information on obstacles 511, 512, and 513 adjacent with the identified moving path 510 and the identified pose and moving path 510 of the external robot 200. In this case, the robot 100 may continuously monitor the pose of the external robot 200 and continuously update the designated moving path 510 for the external robot 200 to not collide with the obstacles 511, 512, and 513. In addition, the robot 100 may change the pose of the external robot 200 for the external robot 200 to travel along the updated moving path 510.

If the robot 100 controls the external robot 200 based on the moving path 520 for cleaning the narrow space between the furniture and the wall surface, the robot 100 may control the external robot 200 based on information on an obstacle 521 adjacent with the identified moving path 520 and the identified pose and moving path 520 of the external robot 200. In this case, the robot 100 may continuously update the designated moving path 520 for the external robot 200 to perform a cleaning task in a state spaced apart by a threshold distance from a surface of the obstacle 521.

In addition, the robot 100 may calculate a likelihood of error occurrence in communication between the robot 100 and the external robot 200 based on the information on obstacles disposed in the area corresponding to the position of the external robot 200 on the map data 500, the identified pose information of the external robot 200, and the moving path of the external robot 200. The robot 100 may transmit a control signal for changing the pose of the external robot 200 to the external robot 200 based on the calculated likelihood of error occurrence being identified as greater than or equal to the threshold value.

In this case, the robot 100 may identify the pose of the external robot 200 at a reference view point, and based on the external robot traveling along a pre-stored moving path 510 or 520 based on the identified pose, control to change the pose of the external robot 200 for the external robot 200 to travel long a corrected moving path and not the pre-stored moving path 510 or 520 if the external robot 200 is predicted as having collided with an obstacle 511, 512, 513, or 521 disposed at an area in which the external robot 200 is positioned.

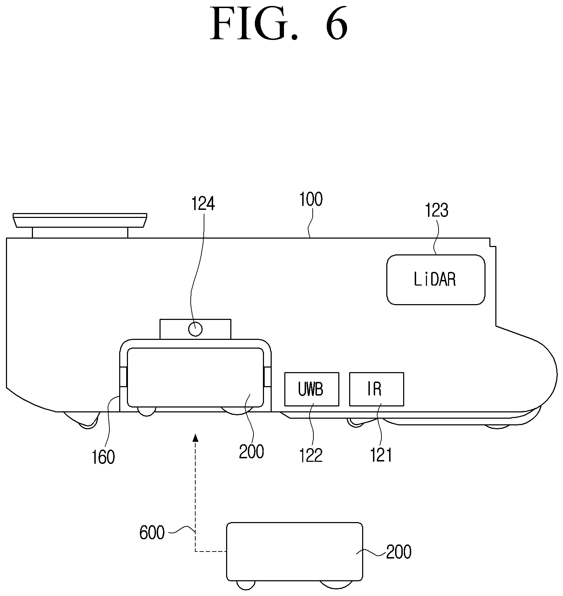

FIG. 6 is a diagram illustrating an operation by a robot accommodating an external robot according to an embodiment of the disclosure.

Referring to FIG. 6, the robot 100 may further include a storage space 160, and the distance sensor 120 provided in the robot 100 may include an infrared sensor 121, a UWB sensor 122, a LIDAR sensor 123, and a 3D camera 124. The robot 100 may plan, if work by the external robot 200 is identified as completed, a return path 600 through which the external robot 200 moves to be accommodated in the storage space 160 based on the pose of the external robot 200. For example, the processor 150 may identify the pose of the external robot 200 based on a sensing signal obtained through the LIDAR sensor 123 and at least one echo signal received from the external robot 200 through the infrared sensor 121 or the UWB sensor 122, and plan the return path 600 based on the identified pose of the external robot 200.

If the external robot 200 moves through the return path 600, the robot 100 may continuously update the pose of the external robot 200 based on data obtained through the distance sensor 120. In addition, the robot 100 may continuously update the return path 600 of the external robot 200 based on a depth image obtained through the 3D camera 124 and the updated pose of the external robot 200.

Accordingly, the robot 100 or the external robot 200 may be prevented from being damaged in an accommodating process of the external robot 200 by the robot 100 continuously updating an optimal path 600 for the external robot 200 to be accurately accommodated in the storage space 160 in a return scenario of the external robot 200.

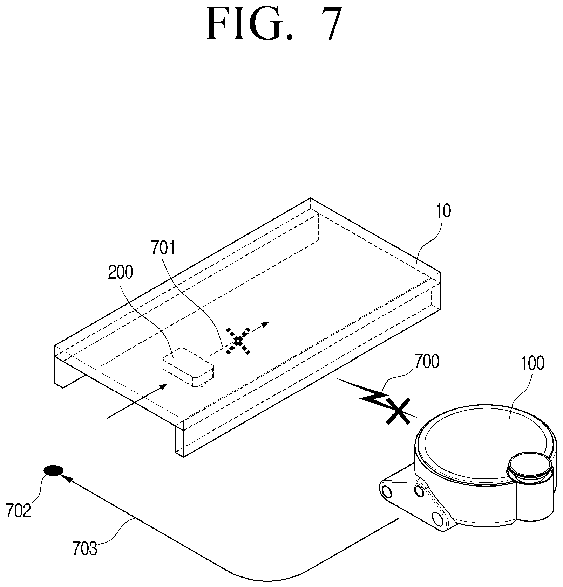

FIG. 7 is a diagram illustrating an error removal operation of a robot according to an embodiment of the disclosure.

Referring to FIG. 7, an error in communication between the robot 100 and the external robot 200 may occur 700 while the external robot 200 is providing a cleaning service traveling the floor surface underneath a furniture 10. In this case, the external robot 200 may stop at a present position without traveling any further when an error in communication is identified as having occurred 700.

The processor 150 may identify, based on an error in communication with the external robot 200 through the communication interface 110 being identified as having occurred 700, a target position 702 from which visibility to the position of the external robot 200 is secured to resume communication based on the pose of the external robot 200 and map data corresponding to the area including the floor surface underneath the furniture 10. In addition, the processor 150 may control the driver 130 for the robot 100 to travel 703 to the identified target position.

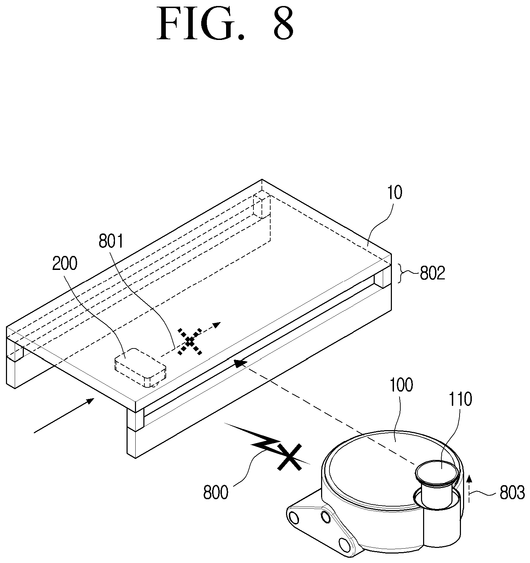

FIG. 8 is a diagram illustrating an error removal operation of a robot according to another embodiment of the disclosure.

Referring to FIG. 8, an error in communication between the robot 100 and the external robot 200 may occur 800 while the external robot 200 is providing a cleaning service traveling the floor surface of the furniture 10 of which a portion area from among a side surface is opened. In this case, the external robot 200 may stop at a present position without traveling any further when an error in communication is identified as having occurred 800.

The processor 150 may identify, based on an error in communication with the external robot 200 through the communication interface 110 being identified as having occurred 800, a target height range 802 from which visibility to the position of the external robot 200 is secured to resume communication based on the pose of the external robot 200 and information on obstacles included on the map data corresponding to the area which includes the floor surface underneath the furniture 10.

For example, the processor 150 may remove the communication error between the robot 100 and the external robot 200 by obtaining information on the Z-axis in which the obstacle 10 is positioned, and adjusting 803 the height of the communication interface 110 by controlling the driver 130 for the communication interface 110 to be positioned within a Z-axis range 802 in which the obstacle 10 is not positioned.

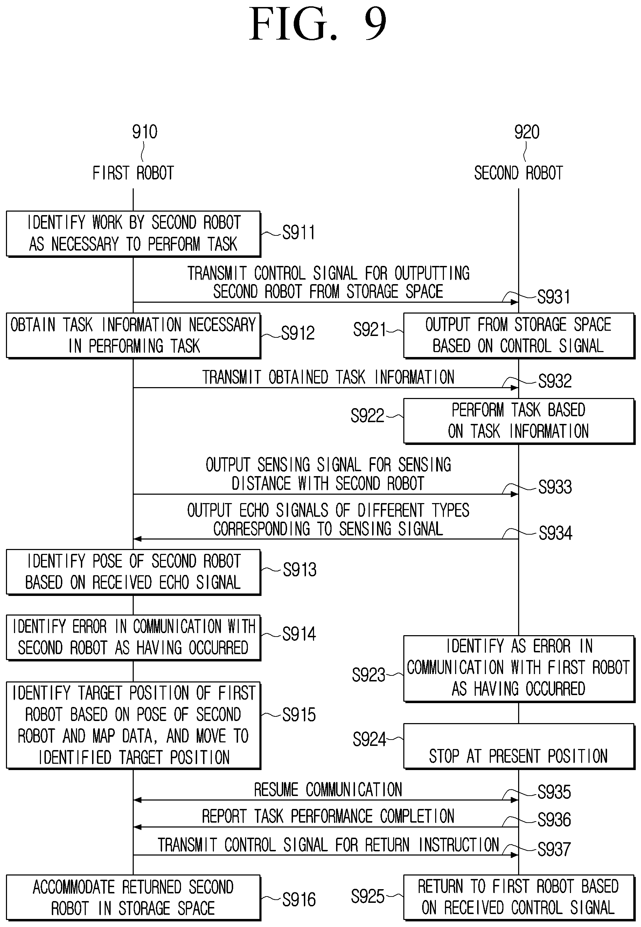

FIG. 9 is a sequence diagram illustrating a service providing process through a robot system according to an embodiment of the disclosure.

The robot system which includes a first robot 910 and a second robot 920 which is accommodated in a storage space of the first robot 910 according to an embodiment of the disclosure may provide a service through cooperation by the first robot 910 and the second robot 920. In addition, the robot system may remove the communication error through an active operation of the first robot 910 and the second robot 920 if an error in communication between the first robot 910 and the second robot 920 occurs.

First, the first robot 910 may identify that work by the second robot 920 is necessary to perform a task (S911). In this case, the first robot 910 may transmit a control signal for outputting the second robot 920 from the storage space to the second robot 920 (S931), and the second robot 920 which received the control signal may be output from the storage space based on the control signal (S921).

Then, the first robot 910 may obtain task information necessary in performing a task of the second robot 920 (S912), and transmit the obtained task information to the second robot 920 (S932). In this case, the first robot 910 may transmit moving path information necessary in performing the task to the second robot 920 together with the task information.

The second robot 920 which received the task information (and moving path information) from the first robot 910 may perform a task based on the received task information (S922). The first robot 910 may continuously monitor the pose of the second robot 920 in the process of the second robot 920 performing a task.

The first robot 910 may output a sensing signal for sensing a distance with the second robot 920 (S933), and the second robot 920 which received the sensing signal may output echo signals of different types corresponding to the sensing signal (S934). The first robot 910 may identify the pose of the second robot based on the received echo signals (S913).

The second robot 920 may identify that an error in communication with the first robot 910 has occurred while performing a task (S923). In this case, the second robot 920 may stop at a present position without traveling any further (S924).

The first robot 910 may identify, in the process of the second robot 920 performing a task, that an error in communication with the second robot 920 has occurred (S914). In this case, the first robot 910 may identify the target position of the first robot 910 based on the pose of the second robot 920 and the map data, and move to the identified target position (S915).

If communication between the first robot 910 and the second robot 920 is resumed as the first robot 910 moves to the target position (S935), the second robot 920 may transmit a signal instructing that performing of the allocated task has been completed to the first robot 910 (S936). The first robot 910 which received report of task performance completion from the second robot 920 may transmit a control signal instructing the return of the second robot 920 to the second robot 920 for the second robot 920 to be accommodated in the storage space (S937).

When the second robot 920 returns to the first robot based on the received control signal (S925), the first robot 910 may accommodate the returned second robot 920 in the storage space (S916) and end the provision of service.

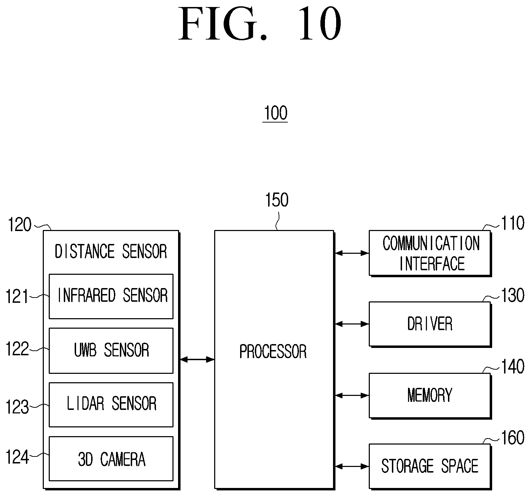

FIG. 10 is a block diagram illustrating in detail a configuration of a robot according to an embodiment of the disclosure.

Referring to FIG. 10, the robot 100 may include the communication interface 110, the infrared sensor 121, the UWB sensor 122, the LiDAR sensor 123, the 3D camera 124, the driver 130, the memory 140, the processor 150, and the storage space 160. Detailed descriptions of configurations that overlap with the configurations shown in FIG. 2 from among the configurations shown in FIG. 10 will be omitted.

The infrared sensor 121 may include a transmitter which emits infrared rays and a receiver which senses infrared rays. The processor 150 may obtain distance data between the infrared sensor 121 and a sensor provided in the external robot based on time between a time-point at which the infrared rays are emitted through the transmitter and a time-point at which an echo of signal infrared signal is received through the receiver and time delay required until the output of the echo signal of the external robot and velocity of light.

The UWB sensor 122 may be a type of a radar sensor which uses electromagnetic waves having an ultra-wide band frequency. According to an example, the processor 150 may output a sensing signal for sensing the distance with the external robot through the UWB sensor 122 acting as the UWB anchor based on receiving radio waves which are continuously output from the external robot, and obtain, by receiving an echo signal corresponding to the sensing signal from the external robot through the UWB sensor 122, distance data between the UWB sensor 122 and the sensor (UWB tag) provided in the external robot based on time between an output time-point of the sensing signal and a receiving time-point of the echo signal and delay time required until the output of the echo signal of the external robot and velocity of light.

The LiDAR sensor 123 may be a type of sensor which uses a laser. The LiDAR sensor 123 may include a mechanical stricture capable of rotating 360 degrees, and the processor 150 may control for the LiDAR sensor 123 to output a laser while continuously rotating. The processor 150 may obtain distance data between the LiDAR sensor 123 and the object by sensing a laser signal output through the LiDAR sensor 123 which is reflected by a surrounding object and returned.

The 3D camera 124 may be a configuration for obtaining a depth image. The 3D camera 124 may be implemented in a form of a camera module which includes a plurality of lenses and a plurality of image sensors. According to an example, the 3D camera 124 may be a stereo camera which includes two lenses and two image sensors, but is not limited thereto. The processor 150 may identify a more accurate pose of the external robot by taking into consideration even the depth image which is obtained through the 3D camera 124 in the process of identifying the pose of the external robot.

The storage space 160 may be a configuration for accommodating the external robot. The storage space 160 may be implemented in a cavity form having a greater volume than a size of the external robot, but is not limited thereto, and the storage space 160 may be disposed at a surface of the robot 100, and implemented in a form including a fastening member by which the external robot is accommodated in the robot 100 bond with the coupling part provided in the external robot.

The processor 150 may control, based on the external robot being output due to work by the external robot being identified as necessary while the external robot is in an accommodated state, the driver 130 such that a fastening part included in the storage space 160 is to be detached from the coupling part provided in the external robot for the external robot to be separated from the robot 100. Alternatively, in a process of the external robot returning to be accommodated in the robot 100, the processor 150 may control the driver 130 such that the fastening part included in the storage space 160 is to be coupled with the coupling part provided in the external robot for the external robot to be accommodated in the robot 100.

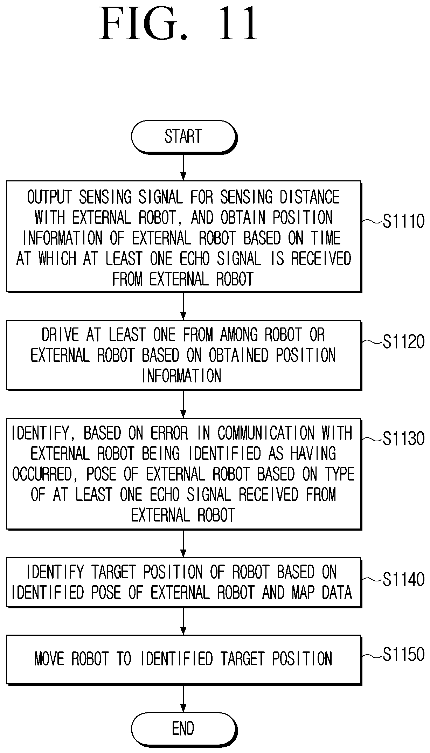

FIG. 11 is a flowchart illustrating a controlling method according to an embodiment of the disclosure.

The controlling method according to an embodiment of the disclosure includes outputting a sensing signal for sensing the distance with the external robot, and obtaining position information of the external robot based on time at which at least one echo signal is received from the external robot (S1110).

Then, at least one from among the robot or the external robot is driven based on the obtained position information (S1120).

Then, the pose of the external robot is identified based on the type of at least one echo signal received from the external robot when an error in communication with the external robot is identified as having occurred (S1130).

Then, the target position of the robot is identified based on the identified pose of the external robot and the map data (S1140).

Lastly, the robot is moved to the identified target position (S1150).

Here, the identifying the pose of the external robot (S1130) includes identifying the pose of the external robot based on the type of at least one echo signal received from the external robot while communicating with the external robot. In addition, the controlling method may further include changing the pose of the external robot based on the identified pose of the external robot and the map data.

In addition, changing the pose of the external robot if an error occurrence in communication is predicted based on the identified pose of the external robot and the map data may be further included.

In the changing the pose of the external robot, a likelihood of error occurrence in communication may be determined based on information on obstacles disposed in the area corresponding to the position of the external robot on the map data, the identified pose of the external robot, and the moving path of the external robot.

The identifying the pose of the external robot (S1130) may include identifying the positions of the respective sensors which output the plurality of echo signals from among the plurality of sensors disposed in the external robot based on the types of the plurality of echo signals received from the external robot when an error in communication with the external robot is identified as having occurred and identifying the pose of the external robot based on the identified positions of the respective sensors.

The methods according to the one or more embodiments of the disclosure described above may be implemented in application form installable in robots of the related art.

In addition, the identifying the target position of the robot (S1140) may include identifying, based on the pose information being received from the external robot, the target position of the robot based on the received pose information, the identified pose of the external robot, and the map data.

In addition, in the obtaining the position information of the external robot (S1110), the position information of the external robot may be obtained based on the sensing signal obtained by the LiDAR sensor and the time at which at least one echo signal is received from the external robot.

In addition, obtaining obstacle information based on the sensing signal obtained by the LiDAR sensor and changing the position of the communication interface provided in the robot based on the obtained obstacle information and the position information of the external robot may be further included.

In addition, outputting the external robot from the storage space in which the external robot is accommodated when work by the external robot is identified as necessary, planning a moving path of the external robot based on the pose of the external robot when work by the external robot is identified as completed, and accommodating the external robot in the storage space based on the planned moving path may be further included.

As described above, the communication error may be overcome by moving to the determined target position based on the pose of the external robot and the map data if an error in communication between the robot and the external robot occurs. Accordingly, because the error which occurred in the communication between the robot and the external robot may be actively removed and provision of service may be resumed, user convenience may be improved.

The methods according to the one or more embodiments of the disclosure described above may be implemented with only a software upgrade or a hardware upgrade of robots of the related art.

In addition, the one or more embodiments of the disclosure described above may be performed through an embedded server provided in the robot or at least one external server.

The one or more embodiments described above may be implemented in a recordable medium which is readable by computer or a device similar to computer using software, hardware, or the combination of software and hardware. In some cases, the embodiments described herein may be implemented by the processor 150 on its own. According to a software implementation, embodiments such as the procedures and functions described herein may be implemented with separate software modules. Each of the software modules may perform one or more of the functions and operations described herein.

Computer instructions for performing processing operations in the robot 100 according to the one or more embodiments of the disclosure described above may be stored in a non-transitory computer-readable medium. The computer instructions stored in this non-transitory computer-readable medium may cause a specific device to perform a processing operation of the robot 100 according to the one or more embodiments when executed by a processor of the specific device.

The non-transitory computer-readable medium may refer to a medium that stores data semi-permanently rather than storing data for a very short time, such as a register, a cache, a memory, or the like, and is readable by a device. Specific examples of the non-transitory computer-readable medium may include, for example, and without limitation, a compact disc (CD), a digital versatile disc (DVD), a hard disc, a Blu-ray disc, a USB, a memory card, a ROM, and the like.

While the disclosure has been illustrated and described with reference to example embodiments thereof, it will be understood that the specific embodiments described above are intended to be illustrative, not limiting.

The above-described embodiments are merely specific examples to describe technical content according to the embodiments of the disclosure and help the understanding of the embodiments of the disclosure, not intended to limit the scope of the embodiments of the disclosure.

## Claims

1. A robot (100) comprising:
a communication interface (110);
a sensor (120) configured to obtain distance data;
a driver (130) configured to control a movement of the robot (100);
a memory (140) storing with map data corresponding to a space in which the robot (100) travels; and
a processor (150) configured to:
control the sensor (120) to output a sensing signal for sensing a distance with an external robot (200),
obtain position information of the external robot (200) based on a time at which at least one echo signal is received from the external robot (200),
control at least one of the driver (130) or an operation state of the external robot (200) based on the position information,
transmit a control signal for controlling the operation state of the external robot (200) through the communication interface (110),
**characterized in that**,
in case of identifying, based on whether the at least on echo signal corresponding to the outputted sensing signal is received through the sensor, that an error in communication (700) with the external robot (200) through the communication interface (110) has occurred:
identify a pose of the external robot based on a type of the at least one echo signal received from the external robot,
identify a target position (702) of the robot (100) based on the pose of the external robot (200) and the stored map data (500),
control the driver (130) to move to the target position (702) to remove the error in communication, and
wherein the target position is a position to which a visibility to the external robot is secured.

2. The robot (100) of claim 1, wherein the processor (150) is further configured to:
identify, while communicating with the external robot (200) through the communication interface (110), the pose of the external robot (200) based on the type of the at least one echo signal received from the external robot (200), and
transmit a control signal for changing the pose of the external robot (200) to the external robot (200) through the communication interface (110) based on the pose of the external robot (200) and the stored map data (500).

3. The robot (100) of claim 1, wherein the processor (150) is further configured to transmit, based on an error occurrence in communication through the communication interface (110) being predicted based on the pose of the external robot (200) and the stored map data (500), a control signal for changing the pose of the external robot (200) to the external robot (200) through the communication interface (110).

4. The robot (100) of claim 3, wherein the processor (150) is further configured to determine a likelihood of an error occurring in communication through the communication interface (110) based on information on obstacles (511, 512, 513) disposed in an area (11) corresponding to a position of the external robot (200) on the map data (500), the pose of the external robot (200), and a moving path (510, 520) of the external robot (200).

5. The robot of claim 1, wherein the external robot comprises a plurality of sensors configured to output echo signals of different types and disposed at different positions, and
wherein the processor is further configured to:
identify, based on an error occurring in communication with the external robot through the communication interface, positions of the plurality of sensors, which output a plurality of echo signals from among the plurality of sensors disposed in the external robot, based on types of the plurality of echo signals received from the external robot, and
identify the pose of the external robot based on the positions of the plurality of sensors.

6. The robot (100) of claim 1, wherein the processor (150) is further configured to identify, based on pose information being received from the external robot (200) through the communication interface (110), the target position (702) of the robot (100) based on the pose information, the pose of the external robot (200), and the stored map data (500).

7. The robot (100) of claim 1, wherein the sensor (120) comprises a light detection and ranging, LiDAR, sensor (123), and
wherein the processor (150) is further configured to obtain the position information of the external robot (200) based on a sensing signal obtained by the LiDAR sensor (123) and the time at which the at least one echo signal is received from the external robot (200).

8. The robot (100) of claim 1, wherein the sensor (120) comprises a light detection and ranging, LiDAR, sensor (123), and
wherein the processor (150) is further configured to:
obtain obstacle information based on a sensing signal obtained by the LiDAR sensor (123), and
change a position of the communication interface (110) based on the obstacle information and the position information of the external robot (200).

9. The robot (100) of claim 1, further comprising a storage space (160) configured to accommodate the external robot (200),
wherein the processor (150) is further configured to:
control, based on work by the external robot (200) being identified as necessary, an output of the external robot (200) from the storage space (160),
plan, based on the work by the external robot (200) being identified as completed, a moving path (510, 520) of the external robot (200) based on the pose of the external robot (200), and
control the operation state of the external robot (200) to accommodate the external robot (200) in the storage space (160) based on the moving path (510, 520).

10. The robot (100) of claim 1, wherein the communication interface (110) is configured to communicate according to a short range communication method comprising Bluetooth communication, and
wherein the sensor (120) comprises at least one of an infrared sensor (121) or an ultra wide band, UWB, sensor.

11. A system comprising:
a first robot (910); and
a second robot (920) which is accommodated in a storage space (160) of the first robot (910),
wherein the second robot (920) comprises a plurality of sensors (211-1, ...,211-4) configured to output echo signals of different types by being disposed at different positions, and
wherein the first robot (910) is a robot according to claim 1 and configured to:
transmit a control signal for outputting the second robot (920) from the storage space (160) to the second robot (920) through a communication interface (110) based on work by the second robot (920) being identified as necessary,
transmit, based on the work by the second robot (920) being identified as completed, a control signal for accommodating the second robot (920) in the storage space (160) to the second robot (920) through the communication interface (110),
output a sensing signal for sensing a distance with the second robot,
identify, based on an error occurring in communication with the second robot through the communication interface, positions of the respective sensors, which output a plurality of echo signals from among the plurality of sensors disposed in the second robot, based on the types of the plurality of echo signals received from the second robot,
identify a pose of the second robot based on the positions of the plurality of sensors,
identify a target position of the first robot based on the pose of the second robot and based on map data, and
move to the target position.

12. A method of controlling a robot (100), the method comprising:
outputting a sensing signal for sensing a distance with an external robot (200), and obtaining position information of the external robot (200) based on a time at which at least one echo signal is received from the external robot (200);
driving at least one of the robot (100) or the external robot (200) based on the position information;
in case of identifying, based on whether the at least on echo signal corresponding to the outputted sensing signal is received, that an error in communication (700) with the external robot (200) through the communication interface (110) has occurred:
identifying a pose of the external robot (200) based on a type of the at least one echo signal received from the external robot;
identifying a target position (702) of the robot (100) based on the pose of the external robot (200) and map data (500);
moving the robot (100) to the target position (702) to remove the error in communication; and
wherein the target position is a position to which a visibility to the external robot is secured.

13. The method of claim 12, wherein the identifying the pose of the external robot (200) comprises identifying, while communicating with the external robot (200), the pose of the external robot (200) based on the type of at least one echo signal received from the external robot (200), and
wherein the method further comprises changing the pose of the external robot (200) based on the pose of the external robot (200) and the map data (500).

14. The method of claim 12, further comprising:
changing, based on an error occurrence in communication being predicted based on the pose of the external robot (200) and the map data (500), the pose of the external robot (200).

15. The method of claim 14, wherein the changing the pose of the external robot (200) comprises determining a likelihood of an error occurring in communication based on information of obstacles (511, 512, 513) disposed in an area corresponding to a position of the external robot (200) on the map data (500), the pose of the external robot (200), and a moving path (510, 520) of the external robot (200).

## Patentansprüche

1. Roboter (100), umfassend:
eine Kommunikationsschnittstelle (110);
einen Sensor (120), der konfiguriert ist, um Abstandsdaten zu erhalten;
einen Treiber (130), der konfiguriert ist, um eine Bewegung des Roboters (100) zu steuern;
einen Speicher (140), in dem Kartendaten gespeichert sind, die einem Raum entsprechen, in dem sich der Roboter (100) bewegt; und
einen Prozessor (150), der konfiguriert ist zum:
Steuern des Sensors (120), um ein Erfassungssignal zum Erfassen eines Abstands zu einem externen Roboter (200) auszugeben,
Erhalten von Positionsinformationen des externen Roboters (200) basierend auf einem Zeitpunkt, zu dem mindestens ein Echosignal von dem externen Roboter (200) empfangen wird,
Steuern von mindestens einem von dem Treiber (130) oder einem Betriebszustand des externen Roboters (200) basierend auf den Positionsinformationen,
Übertragen eines Steuersignals zum Steuern des Betriebszustandes des externen Roboters (200) durch die Kommunikationsschnittstelle (110),
**dadurch gekennzeichnet, dass**
im Falle von Identifizieren, basierend darauf, ob das mindestens eine Echosignal, das dem ausgegebenen Erfassungssignal entspricht, durch den Sensor empfangen wird, dass ein Fehler in der Kommunikation (700) mit dem externen Roboter (200) durch die Kommunikationsschnittstelle (110) aufgetreten ist:
Identifizieren einer Pose des externen Roboters basierend auf einem Typ des mindestens einen von dem externen Roboter empfangenen Echosignals,
Identifizieren einer Zielposition (702) des Roboters (100) basierend auf der Pose des externen Roboters (200) und den gespeicherten Kartendaten (500),
Steuern des Treibers (130), um sich zu der Zielposition (702) zu bewegen, um den Fehler in der Kommunikation zu beheben, und
wobei die Zielposition eine Position ist, an der eine Sichtbarkeit für den externen Roboter sichergestellt ist.

2. Roboter (100) nach Anspruch 1, wobei der Prozessor (150) ferner konfiguriert ist zum:
Identifizieren, während des Kommunizierens mit dem externen Roboter (200) durch die Kommunikationsschnittstelle (110), der Pose des externen Roboters (200) basierend auf dem Typ des mindestens einen von dem externen Roboter (200) empfangenen Echosignals, und
Übertragen eines Steuersignals zum Ändern der Pose des externen Roboters (200) durch die Kommunikationsschnittstelle (110) an den externen Roboter (200) basierend auf der Pose des externen Roboters (200) und den gespeicherten Kartendaten (500).

3. Roboter (100) nach Anspruch 1, wobei der Prozessor (150) ferner konfiguriert ist, um basierend auf einem Fehlerauftritt in der Kommunikation durch die Kommunikationsschnittstelle (110), der basierend auf der Pose des externen Roboters (200) und den gespeicherten Kartendaten (500) vorhergesagt wird, ein Steuersignal zum Ändern der Pose des externen Roboters (200) durch die Kommunikationsschnittstelle (110) an den externen Roboter (200) zu übertragen.

4. Roboter (100) nach Anspruch 3, wobei der Prozessor (150) ferner konfiguriert ist, um eine Wahrscheinlichkeit für das Auftreten eines Fehlers in der Kommunikation durch die Kommunikationsschnittstelle (110) basierend auf Informationen über Hindernisse (511, 512, 513), die in einem Bereich (11) angeordnet sind, der einer Position des externen Roboters (200) in den Kartendaten (500) entspricht, der Pose des externen Roboters (200) und einem Bewegungspfad (510, 520) des externen Roboters (200) zu bestimmen.

5. Roboter nach Anspruch 1, wobei der externe Roboter eine Vielzahl von Sensoren umfasst, die so konfiguriert sind, dass sie Echosignale unterschiedlicher Typen ausgeben, und an unterschiedlichen Positionen angeordnet sind, und
wobei der Prozessor ferner konfiguriert ist zum:
Identifizieren, basierend auf dem Auftreten eines Fehlers in der Kommunikation mit dem externen Roboter durch die Kommunikationsschnittstelle, von Positionen der Vielzahl von Sensoren, die eine Vielzahl von Echosignalen ausgeben, aus der Vielzahl von Sensoren, die in dem externen Roboter angeordnet sind, und zwar basierend auf den Typen der Vielzahl von Echosignalen, die von dem externen Roboter empfangen werden, und
Identifizieren der Pose des externen Roboters basierend auf den Positionen der Vielzahl von Sensoren.

6. Roboter (100) nach Anspruch 1, wobei der Prozessor (150) ferner konfiguriert ist, um basierend auf Poseninformationen, die von dem externen Roboter (200) durch die Kommunikationsschnittstelle (110) empfangen werden, die Zielposition (702) des Roboters (100) basierend auf den Poseninformationen, der Pose des externen Roboters (200) und den gespeicherten Kartendaten (500) zu identifizieren.

7. Roboter (100) nach Anspruch 1, wobei der Sensor (120) einen Sensor (123) zur Lichtdetektion und Entfernungsmessung, LiDAR, umfasst, und
wobei der Prozessor (150) ferner konfiguriert ist, um die Positionsinformationen des externen Roboters (200) basierend auf einem vom LiDAR-Sensor (123) erhaltenen Erfassungssignal und dem Zeitpunkt, zu dem das mindestens eine Echosignal vom externen Roboter (200) empfangen wird, zu erhalten.

8. Roboter (100) nach Anspruch 1, wobei der Sensor (120) einen Sensor (123) zur Lichtdetektion und Entfernungsmessung, LiDAR, umfasst, und
wobei der Prozessor (150) ferner konfiguriert ist zum:
Erhalten von Hindernisinformationen basierend auf einem von dem LiDAR-Sensor (123) erhaltenen Erfassungssignal, und
Ändern einer Position der Kommunikationsschnittstelle (110) basierend auf den Hindernisinformationen und den Positionsinformationen des externen Roboters (200).

9. Roboter (100) nach Anspruch 1, ferner umfassend einen Aufbewahrungsraum (160), der konfiguriert ist, um den externen Roboter (200) aufzunehmen,
wobei der Prozessor (150) ferner konfiguriert ist zum:
Steuern, basierend auf einer als notwendig identifizierten Arbeit des externen Roboters (200), einer Ausgabe des externen Roboters (200) aus dem Aufbewahrungsraum (160),
Planen, basierend auf der als abgeschlossen identifizierten Arbeit des externen Roboters (200), eines Bewegungspfads (510, 520) des externen Roboters (200) basierend auf der Pose des externen Roboters (200), und
Steuern des Betriebszustands des externen Roboters (200), um den externen Roboter (200) in dem Aufbewahrungsraum (160) auszunehmen, basierend auf dem Bewegungspfad (510, 520).

10. Roboter (100) nach Anspruch 1, wobei die Kommunikationsschnittstelle (110) so konfiguriert ist, dass sie gemäß einem Nahbereichskommunikationsverfahren, das Bluetooth-Kommunikation umfasst, kommuniziert, und
wobei der Sensor (120) mindestens einen von einem Infrarotsensor (121) oder einem Ultrabreitband-, UWB, -Sensor umfasst.

11. System, umfassend:
einen ersten Roboter (910); und
einen zweiten Roboter (920), der in einem Aufbewahrungsraum (160) des ersten Roboters (910) aufgenommen ist,
wobei der zweite Roboter (920) eine Vielzahl von Sensoren (211-1, ..., 211-4) umfasst, die so konfiguriert sind, dass sie Echosignale unterschiedlicher Typen ausgeben, indem sie an unterschiedlichen Positionen angeordnet sind, und
wobei der erste Roboter (910) ein Roboter nach Anspruch 1 ist und konfiguriert ist zum:
Übertragen eines Steuersignals zum Ausgeben des zweiten Roboters (920) aus dem Aufbewahrungsraum (160) an den zweiten Roboter (920) durch eine Kommunikationsschnittstelle (110) basierend auf einer als notwendig identifizierten Arbeit des zweiten Roboters (920),
Übertragen, basierend auf der als abgeschlossen identifizierten Arbeit des zweiten Roboters (920), eines Steuersignals zum Aufnehmen des zweiten Roboters (920) in dem Aufbewahrungsraum (160) durch die Kommunikationsschnittstelle (110) an den zweiten Roboter (920),
Ausgeben eines Erfassungssignals zum Erfassen eines Abstands zu dem zweiten Roboter,
Identifizieren, basierend auf einem Auftreten eines Fehlers in der Kommunikation mit dem zweiten Roboter durch die Kommunikationsschnittstelle, von Positionen der jeweiligen Sensoren, die eine Vielzahl von Echosignalen ausgeben, aus der Vielzahl von Sensoren, die in dem zweiten Roboter angeordnet sind, und zwar basierend auf den Typen der Vielzahl von Echosignalen, die von dem zweiten Roboter empfangen werden,
Identifizieren einer Pose des zweiten Roboters basierend auf den Positionen der Vielzahl von Sensoren,
Identifizieren einer Zielposition des ersten Roboters basierend auf der Pose des zweiten Roboters und basierend auf Kartendaten, und
Bewegen zu der Zielposition.

12. Verfahren zum Steuern eines Roboters (100), wobei das Verfahren Folgendes umfasst:
Ausgeben eines Erfassungssignals zum Erfassen eines Abstands zu einem externen Roboter (200), und Erhalten von Positionsinformationen des externen Roboters (200) basierend auf einem Zeitpunkt, zu dem mindestens ein Echosignal von dem externen Roboter (200) empfangen wird;
Antreiben von mindestens einem von dem Roboters (100) oder dem externen Roboter (200) basierend auf den Positionsinformationen;
im Falle von Identifizieren, basierend darauf, ob das mindestens eine Echosignal, das dem ausgegebenen Erfassungssignal entspricht, empfangen wird, dass ein Fehler in der Kommunikation (700) mit dem externen Roboter (200) durch die Kommunikationsschnittstelle (110) aufgetreten ist:
Identifizieren einer Pose des externen Roboters (200) basierend auf einem Typ des mindestens einen von dem externen Roboter empfangenen Echosignals;
Identifizieren einer Zielposition (702) des Roboters (100) basierend auf der Pose des externen Roboters (200) und auf Kartendaten (500);
Bewegen des Roboters (100) zu der Zielposition (702), um den Fehler in der Kommunikation zu beheben; und
wobei die Zielposition eine Position ist, an der eine Sichtbarkeit für den externen Roboter sichergestellt ist.

13. Verfahren nach Anspruch 12, wobei das Identifizieren der Pose des externen Roboters (200) Identifizieren, während des Kommunizierens mit dem externen Roboter (200), der Pose des externen Roboters (200) basierend auf dem Typ von mindestens einem von dem externen Roboter (200) empfangenen Echosignal umfasst, und
wobei das Verfahren ferner Ändern der Pose des externen Roboters (200) basierend auf der Pose des externen Roboters (200) und den Kartendaten (500) umfasst.

14. Verfahren nach Anspruch 12, ferner umfassend:
Ändern der Pose des externen Roboters (200) basierend auf einem Auftreten eines Fehlers in der Kommunikation, der basierend auf der Pose des externen Roboters (200) und den Kartendaten (500) vorhergesagt wird.

15. Verfahren nach Anspruch 14, wobei das Ändern der Pose des externen Roboters (200) Bestimmen einer Wahrscheinlichkeit für das Auftreten eines Fehlers in der Kommunikation basierend auf Informationen über Hindernisse (511, 512, 513), die in einem Bereich angeordnet sind, der einer Position des externen Roboters (200) in den Kartendaten (500) entspricht, der Pose des externen Roboters (200) und einem Bewegungspfad (510, 520) des externen Roboters (200) umfasst.

## Revendications

1. Robot (100), comprenant :
une interface de communication (110) ;
un capteur (120) configuré pour obtenir des données de distance ; et
un pilote (130) configuré pour commander un mouvement du robot (100),
une mémoire (140) stockant des données cartographiques correspondant à un espace dans lequel le robot (100) se déplace ; et
un processeur (150) configuré pour :
commander le capteur (120) pour qu'il émette un signal de détection permettant de détecter une distance avec un robot externe (200),
obtenir des informations de position du robot externe (200) en se basant sur un moment où au moins un signal d'écho est reçu depuis le robot externe (200),
commander au moins l'un du pilote (130) ou d'un état d'opération du robot externe (200) sur la base des informations de position,
transmettre un signal de commande pour commander l'état d'opération du robot externe (200) par l'intermédiaire de l'interface de communication (110),
**caractérisé en ce que**,
en cas d'identification, selon que l'au moins un signal d'écho correspondant au signal de détection émis est reçu ou non par le capteur, qu'une erreur de communication (700) avec le robot externe (200) par l'interface de communication (110) s'est produite :
identifier une pose du robot externe sur la base d'un type de l'au moins un signal d'écho reçu depuis le robot externe,
identifier une position cible (702) du robot (100) en se basant sur la pose du robot externe (200) et les données cartographiques stockées (500),
commander au pilote (130) de se déplacer jusqu'à la position cible (702) pour supprimer l'erreur survenant dans la communication, et
dans lequel la position cible est une position à laquelle la visibilité du robot externe est assurée.

2. Robot (100) de la revendication 1, dans lequel le processeur (150) est en outre configuré pour :
identifier, en communiquant avec le robot externe (200) par l'intermédiaire de l'interface de communication (110), la pose du robot externe (200) sur la base du type de l'au moins un signal d'écho reçu depuis le robot externe (200), et
transmettre un signal de commande pour modifier la pose du robot externe (200) au robot externe (200) par l'intermédiaire de l'interface de communication (110) en se basant sur la pose du robot externe (200) et les données cartographiques stockées (500).

3. Robot (100) de la revendication 1, dans lequel le processeur (150) est en outre configuré pour transmettre, en se basant sur une occurrence d'erreur dans la communication à travers l'interface de communication (110) étant prédite sur la base de la pose du robot externe (200) et des données cartographiques stockées (500), un signal de commande pour changer la pose du robot externe (200) au robot externe (200) à travers l'interface de communication (110).

4. Robot (100) de la revendication 3, dans lequel le processeur (150) est en outre configuré pour déterminer une probabilité qu'une erreur se produise dans la communication à travers l'interface de communication (110) en se basant sur des informations d'obstacle (511, 512, 513) disposés dans une zone (11) correspondant à une position du robot externe (200) sur les données cartographiques (500), la pose du robot externe (200), et une trajectoire de déplacement (510, 520) du robot externe (200).

5. Robot de la revendication 1, dans lequel le robot externe comprend une pluralité de capteurs configurés pour émettre des signaux d'écho de différents types et disposés à différentes positions, et
dans lequel le processeur est en outre configuré pour :
identifier, sur la base d'une erreur survenant dans la communication avec le robot externe via l'interface de communication, des positions de la pluralité de capteurs, qui émettent une pluralité de signaux d'écho parmi la pluralité de capteurs disposés dans le robot externe, sur la base de types de la pluralité de signaux d'écho reçus depuis le robot externe, et
identifier la pose du robot externe en se basant sur les positions de la pluralité de capteurs.

6. Robot (100) de la revendication 1, dans lequel le processeur (150) est en outre configuré pour identifier, sur la base d'informations de pose étant reçues depuis le robot externe (200) par l'intermédiaire de l'interface de communication (110), la position cible (702) du robot (100) en se basant sur les informations de pose, la pose du robot externe (200) et les données cartographiques stockées (500).

7. Robot (100) de la revendication 1, dans lequel le capteur (120) comprend un capteur de détection et de télémétrie par ondes lumineuses, LiDAR, (123), et
dans lequel le processeur (150) est en outre configuré pour obtenir les informations de position du robot externe (200) en se basant sur un signal de détection obtenu par le capteur LiDAR (123) et le temps auquel l'au moins un signal d'écho est reçu depuis le robot externe (200).

8. Robot (100) de la revendication 1, dans lequel le capteur (120) comprend un capteur de détection et de télémétrie par ondes lumineuses (LiDAR) (123), et
dans lequel le processeur (150) est en outre configuré pour :
obtenir des informations d'obstacle en se basant sur un signal de détection obtenu par le capteur LiDAR (123), et
modifier une position de l'interface de communication (110) en se basant sur les informations d'obstacle et sur les informations de position du robot externe (200).

9. Robot (100) de la revendication 1, comprenant en outre un espace de stockage (160) configuré pour accueillir le robot externe (200),
dans lequel le processeur (150) est en outre configuré pour :
commander, en se basant sur le travail fait par le robot externe (200) étant identifié comme nécessaire, une émission du robot externe (200) depuis l'espace de stockage (160),
planifier, en se basant sur le travail fait par le robot externe (200) étant identifié comme terminé, une trajectoire de déplacement (510, 520) du robot externe (200) sur la base de la pose du robot externe (200), et
commander l'état d'opération du robot externe (200) pour accueillir le robot externe (200) dans l'espace de stockage (160) en se basant sur la trajectoire de déplacement (510, 520).

10. Robot (100) de la revendication 1, dans lequel l'interface de communication (110) est configurée pour communiquer selon un procédé de communication à courte portée comprenant la communication Bluetooth, et
dans lequel le capteur (120) comprend au moins l'un d'un capteur infrarouge (121) ou d'un capteur à bande ultra large, UWB.

11. Système comprenant :
un premier robot (910) ; et
un deuxième robot (920) qui est accueilli dans un espace de stockage (160) du premier robot (910),
dans lequel le deuxième robot (920) comprend une pluralité de capteurs (211-1, ..., 211-4) configurés pour émettre des signaux d'écho de différents types en étant disposés à différentes positions, et
dans lequel le premier robot (910) est un robot selon la revendication 1 et configuré pour :
transmettre un signal de commande pour sortir le deuxième robot (920) de l'espace de stockage (160) au deuxième robot (920) par l'intermédiaire d'une interface de communication (110) en se basant sur le travail fait par le deuxième robot (920) étant identifié comme nécessaire,
transmettre, en se basant sur le travail fait par le deuxième robot (920) étant identifié comme terminé, un signal de commande pour accueillir le deuxième robot (920) dans l'espace de stockage (160) au deuxième robot (920) par l'intermédiaire de l'interface de communication (110),
émettre un signal de détection pour détecter une distance avec le deuxième robot,
identifier, en se basant sur une erreur survenant dans la communication avec le deuxième robot via l'interface de communication, des positions des capteurs respectifs qui émettent une pluralité de signaux d'écho parmi la pluralité de capteurs disposés dans le deuxième robot, en se basant sur les types de la pluralité de signaux d'écho reçus depuis le deuxième robot,
identifier une pose du deuxième robot en se basant sur les positions de la pluralité de capteurs,
identifier une position cible du premier robot en se basant sur la pose du deuxième robot et sur des données cartographiques, et
se déplacer jusqu'à la position cible.

12. Procédé de commande d'un robot (100), le procédé comprenant :
émettre un signal de détection pour détecter une distance avec un robot externe (200), et obtenir des informations de position du robot externe (200) en se basant sur un moment où au moins un signal d'écho est reçu depuis le robot externe (200) ;
piloter au moins l'un du robot (100) ou du robot externe (200) en se basant sur les informations de position ;
en cas d'identification, selon que l'au moins un signal d'écho correspondant au signal de détection émis est reçu ou non, qu'une erreur survenant dans la communication (700) avec le robot externe (200) par l'interface de communication (110) s'est produite :
identifier une pose du robot externe (200) sur la base d'un type de l'au moins un signal d'écho reçu depuis le robot externe,
identifier une position cible (702) du robot (100) en se basant sur la pose du robot externe (200) et des données cartographiques (500) ;
déplacer le robot (100) vers la position cible (702) pour supprimer l'erreur survenant dans la communication ; et
dans lequel la position cible est une position à laquelle la visibilité du robot externe est assurée.

13. Procédé de la revendication 12, dans lequel l'identification de la pose du robot externe (200) comprend l'identification, pendant la communication avec le robot externe (200), de la pose du robot externe (200) sur la base du type d'au moins un signal d'écho reçu depuis le robot externe (200), et
dans lequel le procédé comprend en outre la modification de la pose du robot externe (200) en se basant sur la pose du robot externe (200) et les données cartographiques (500).

14. Procédé de la revendication 12, comprenant en outre :
modifier, sur la base d'une erreur survenant dans la communication étant prévue en se basant sur la pose du robot externe (200) et les données cartographiques (500), la pose du robot externe (200).

15. Procédé de la revendication 14, dans lequel la modification de la pose du robot externe (200) comprend la détermination d'une probabilité qu'une erreur se produise dans la communication en se basant sur des informations d'obstacle (511, 512, 513) disposés dans une zone correspondant à une position du robot externe (200) sur les données cartographiques (500), la pose du robot externe (200), et une trajectoire de déplacement (510, 520) du robot externe (200).
